# FASCICULE DE BREVET EUROPEEN

(11) **EP 1 630 444 B1**
(45) Date de publication et mention de la délivrance du brevet: **18.11.2009**
(21) Numéro de dépôt: 05291715.0
(22) Date de dépôt: 11.08.2005
(51) Int. Cl.: F16D 55/224

(54) **Cylindre de commande pour timonerie de frein ferroviaire**
Bremsbetätigungseinrichtung für Schienenfahrzeuge
Brake actuator for railway vehicles

(30) Priorité: 27.08.2004 FR 0409143
(43) Date de publication de la demande: 01.03.2006
(73) Titulaire: Faiveley Transport Amiens, 80000 Amiens (FR)
(72) Inventeur: Brugait, Jean-Louis, 80300 Albert (FR); Goncalves, Claudino, 80000 Amiens (FR)
(74) Mandataire: Kurtz, Laurent Charles Edmond

(56) Documents cités:
- DE-A1- 1 600 085
- US-A- 4 066 152

## Description

L'invention a trait au domaine des systèmes de freinage pour véhicules ferroviaires.

Elle concerne plus particulièrement un cylindre de frein adapté à la commande d'une timonerie de frein ferroviaire.

Les systèmes assurant le freinage des trains et autres matériels ferroviaires comportent généralement un dispositif dénommé "timonerie" formé de deux leviers, ci-après dénommés "mors", articulés sur un connecteur formant bâti de telle sorte que, pour chacun des mors, le déplacement d'une première de ses extrémités entraîne le déplacement de sa deuxième extrémité située de l'autre côté du point d'articulation au connecteur.

Chacun des mors de la timonerie comporte, dans cette configuration, une garniture de frein fixée à sa deuxième extrémité, les mors étant agencés pour que les deux garnitures de frein soient face à face et puissent agir par serrage sur un disque de frein ou directement sur une roue du véhicule.

Ce système de freinage est généralement commandé par un cylindre de frein comportant deux extrémités reliées chacune à la première extrémité de l'un des mors. La commande du freinage, c'est-à-dire du rapprochement des garnitures de frein, est assurée par la variation de l'écart entre la première et la deuxième extrémités du cylindre de frein grâce à un agent de pression tel que de l'air comprimé ou de l'huile mise en pression par un dispositif hydraulique.

On connaît de tels cylindres de frein comportant un actionneur muni d'un piston qui est relié à un circuit d'air comprimé. Ces cylindres de frein comportent en outre un levier dont une première extrémité est montée à rotation sur la tige du piston, et une deuxième extrémité est montée à rotation sur un régleur. Le régleur est relié à l'un des mors de la timonerie et est constitué d'une tige de longueur variable adaptée à rattraper automatiquement les jeux de freinage.

Le levier prend de plus appui sur une butée disposée entre ses deux extrémités de manière que, lors du mouvement du piston et donc de sa tige, le levier pivote autour de la butée et transmette le mouvement du piston au régleur.

Il est ainsi possible de faire varier l'écart entre la première extrémité du cylindre formée par le corps du cylindre et la deuxième extrémité du cylindre formée par le régleur, à l'aide du piston.

Le document US 4066152 révèle le préambule de la revendication 1.

Le but de l'invention est d'améliorer ce type de cylindre de frein.

A cet effet, l'invention vise un cylindre de commande pour timonerie de frein ferroviaire, présentant une première extrémité et une deuxième extrémité écartées d'une distance adaptée à varier en réponse à la sollicitation d'un agent de pression, la première extrémité et la deuxième extrémité étant prévues pour être reliées chacune à un mors muni d'une garniture de frein, les mors étant articulés sur un bâti, ce cylindre de commande comportant, entre sa première extrémité et sa deuxième extrémité, un actionneur relié à l'agent de pression et adapté à agir sur un levier qui présente deux points d'articulation extrêmes pour sa liaison avec respectivement l'actionneur et la deuxième extrémité du cylindre ; et un point d'articulation intermédiaire autour duquel le levier est adapté à pivoter, ce cylindre de frein étant caractérisé en ce qu'il comporte en outre des moyens d'ajustement définitifs qui sont verrouillés en fonctionnement normal pour faire varier l'écart entre le point d'articulation intermédiaire et les points d'articulation extrêmes, l'écart entre les points d'articulation extrêmes étant sensiblement fixe.

Un tel cylindre de commande permet un ajustement du bras de levier disponible pour la transmission de la force exercée par le piston sur la deuxième extrémité du cylindre.

On notera que la dénomination "moyens d'ajustement définitifs qui sont verrouillés en fonctionnement normal" indique que les moyens d'ajustement ne permettent pas un réglage dynamique du bras de levier, lors du fonctionnement normal du véhicule ferroviaire mais permettent au contraire de mettre le cylindre de commande dans une configuration où il est adapté à un véhicule particulier, avant ou lors du montage du cylindre de commande et de la timonerie de frein sur le véhicule. Eventuellement, les moyens d'ajustement peuvent être mis en oeuvre lors d'opérations particulières de maintenance ou de reconditionnement du véhicule ferroviaire sur lequel ils étaient montés.

Des cylindres de commande conformes à l'invention peuvent donc être produits selon un seul et même modèle pour être montés sur des véhicules ferroviaires différents. Chacun des cylindres de commande pourra être ajusté, lors de son montage, pour le type de frein ferroviaire particulier auquel il est destiné.

Le cylindre de commande selon l'invention remplace ainsi avantageusement une gamme de cylindres de commande conçus sur mesure pour chaque véhicule ferroviaire particulier.

Un avantage en termes de coût et de délai de fabrication est obtenu dans la mesure où l'invention permet à un cylindre de commande produit selon une seule conception et désigné par une seule référence d'être à même de s'adapter à différents milieux particuliers.

Le cylindre selon l'invention peut en outre comporter les caractéristiques suivantes, seules ou en combinaison :
- les moyens d'ajustement comportent des moyens de déplacement du point d'articulation intermédiaire par rapport aux points d'articulation extrêmes ;
- les moyens de déplacement comportent une glissière dont le coulisseau est relié au point d'articulation intermédiaire ;
- les moyens d'ajustement comportent des moyens de verrouillage du point d'articulation intermédiaire par rapport aux points d'articulation extrêmes ;
- les moyens de verrouillage comportent une butée à vis ;
- le levier est relié respectivement à l'actionneur et à la deuxième extrémité du cylindre par une liaison pivot au niveau de chacun des points d'articulation extrêmes et il est en appui contre une butée réglable au niveau du point d'articulation intermédiaire, les moyens d'ajustement étant adaptés à modifier la position de la butée réglable ;
- la butée réglable comporte un roulement monté sur une glissière ; et
- le levier est relié au point d'articulation intermédiaire par une liaison pivot et est en appui contre une première butée reliée à l'actionneur et une deuxième butée reliée à la deuxième extrémité, les moyens d'ajustement étant adaptés à modifier la position du levier.

D'autres caractéristiques et avantages de l'invention apparaissent à la lumière de la description qui va suivre d'un mode de réalisation préféré donné à titre d'exemple non limitatif, description faite en référence aux dessins annexés dans lesquels :
- la figure 1 est une vue en perspective d'une timonerie de frein ferroviaire sur laquelle est monté un cylindre de frein conforme à l'invention ;
- la figure 2 est un schéma cinématique d'une timonerie et d'un cylindre de frein selon un premier mode de réalisation de l'invention, le frein étant desserré ;
- la figure 3 représente la timonerie et le cylindre de frein de la figure 2, le frein étant serré ;
- la figure 4 est une reprise de la figure 3 montrant en outre deux positions possibles des moyens d'ajustement coopérant avec le levier du cylindre de frein ;
- les figures 5 et 6 sont des vues en perspective d'un cylindre de frein selon le mode de réalisation des figures 2 à 4 et montrant les moyens d'ajustement respectivement dans deux positions différentes par rapport au levier ;
- la figure 7 est une vue de côté du cylindre de frein de la figure 6, selon une coupe le long de l'axe longitudinal du régleur ;
- la figure 8 est une vue de dessus du cylindre de frein de la figure 7, selon la coupe VIII-VIII ;
- la figure 9 est une vue de côté du cylindre de frein de la figure 8 selon la coupe lX-lX ; et
- les figures 10, 11 et 12 sont similaires aux figures 2, 3 et 4 pour un cylindre de frein conforme à un deuxième mode de réalisation de l'invention.

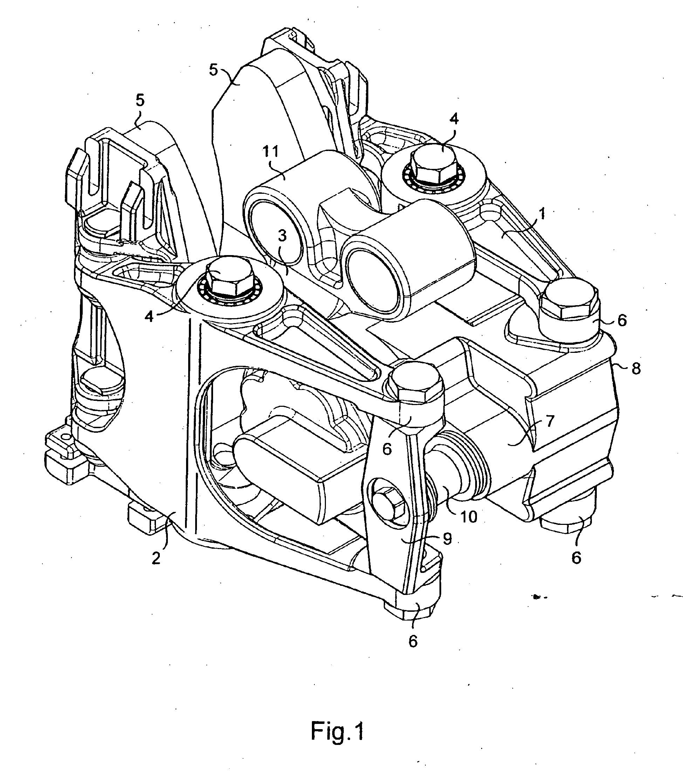

La figure 1 montre une timonerie munie d'un cylindre de frein, telle qu'elle se présente avant son montage sur un véhicule ferroviaire.

La timonerie comporte un premier mors 1 et un deuxième mors 2 articulés chacun par leur milieu sur un connecteur central 3 grâce à deux pivots 4.

Chacun des mors 1, 2 comporte à l'une de ses extrémités une garniture de frein 5 tandis que l'autre de ses extrémités est en forme de fourche qui comporte, à l'extrémité de chacune des branches de la fourche, un oeillet 6 destiné à former une liaison pivot.

La timonerie reçoit un cylindre de frein 7 qui comporte une première extrémité 8 montée à rotation sur les oeillets 6 du premier mors 1, et une deuxième extrémité 9 montée à rotation sur les oeillets 6 du deuxième mors 2. Cette deuxième extrémité 9 est reliée à un régleur 10.

La timonerie de la figure 1 comporte une patte de fixation 11 solidaire du connecteur 3 pour le montage de cette timonerie sur le véhicule ferroviaire de manière que les garnitures de frein 5 soient situées de part et d'autre d'un disque de frein ou de la roue du véhicule ferroviaire.

Le rapprochement de la première extrémité 8 et de la deuxième extrémité 9 du cylindre 7 permet ainsi d'écarter les garnitures 5 l'une de l'autre. A l'inverse, un éloignement de ces deux extrémités 8, 9 permet le serrage des garnitures 5 sur la pièce à freiner.

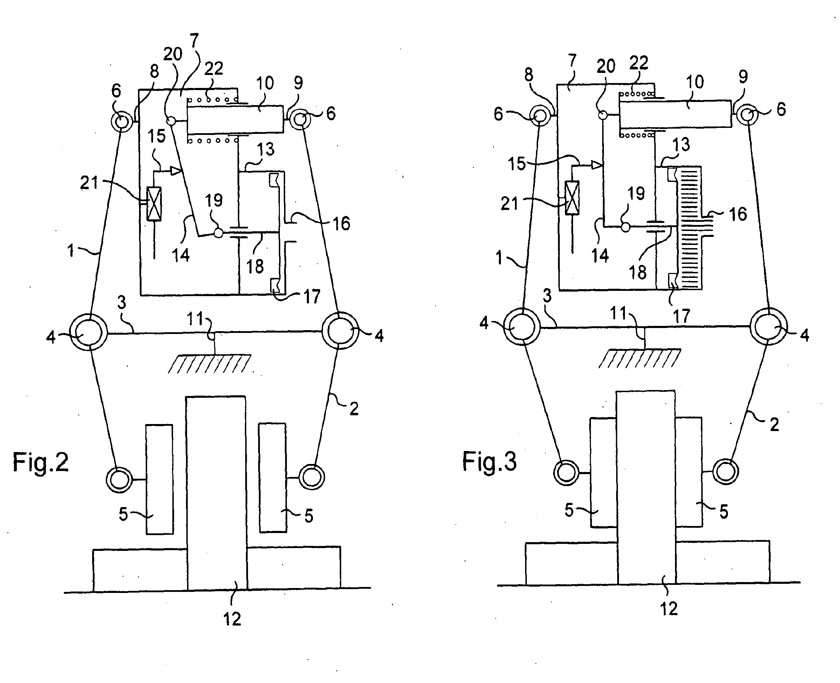

Les figures 2 à 4 montrent schématiquement le fonctionnement de la timonerie de la figure 1. La figure 2 représente la timonerie dans un état où le frein est desserré : les garnitures 5 sont écartées d'un disque de frein 12 schématiquement représenté.

Ces figures montrent les constituants internes du cylindre de frein 7. Le cylindre de frein 7 comporte en effet un vérin 13, relié à un levier 14 prenant appui sur une butée ajustable 15, ainsi qu'un régleur 10.

Le vérin 13 comporte un raccord 16 pour sa liaison avec un agent de pression qui est dans le présent exemple de l'air comprimé, ainsi qu'un piston 17 solidaire d'une tige de vérin 18 qui est reliée par un pivot 19 à l'une des extrémités du levier 14.

L'autre extrémité du levier 14 est également reliée par un pivot 20 au régleur 10.

Le régleur 10 est un mécanisme en forme de tige adapté à transmettre le mouvement du pivot 20 à la deuxième extrémité 9 du cylindre de frein 7 tout en rattrapant les jeux de fonctionnement ou d'usure qui pourraient influer sur la distance entre les garnitures 5 et le disque 12. Ce type de régleur étant connu et couramment employé dans ce domaine, il ne sera pas plus décrit en détail ici. Le régleur 10 est donc un bras de transmission permettant de relier le pivot 20 à la seconde extrémité 9 du cylindre de frein 7.

Un ressort 22 est de plus prévu pour maintenir les garnitures 5 écartées lorsque le cylindre de frein 7 n'est pas activé.

La butée ajustable 15 est montée sur une glissière 21 et vient en appui contre le levier 14 de sorte que la sortie de la tige de vérin 18 provoque le basculement du levier 14 autour de cette butée 15.

La figure 3 montre la disposition des éléments constituant le cylindre de frein 7 après que l'agent de pression ait été appliqué au vérin 13, c'est-à-dire ici après que l'air comprimé ait été introduit par le raccord 16.

Le piston 17 et sa tige 8 sont alors repoussés par l'air comprimé, entraînant le levier 14 à pivoter autour de la butée 15 et, par conséquent, à repousser le pivot 20 et la deuxième extrémité 9 du cylindre 7 vers l'extérieur, c'est-à-dire de manière que la distance entre la première extrémité 8 et la deuxième extrémité 9 du cylindre 7 augmente.

Les garnitures 5 sont alors pressées contre le cylindre 12 avec une force qui dépend de la pression de l'air comprimé.

Un relâchement de la pression de l'air comprimé appliquée au vérin 13 entraîne le passage de cette position freinée de la figure 3 à la position de la figure 2.

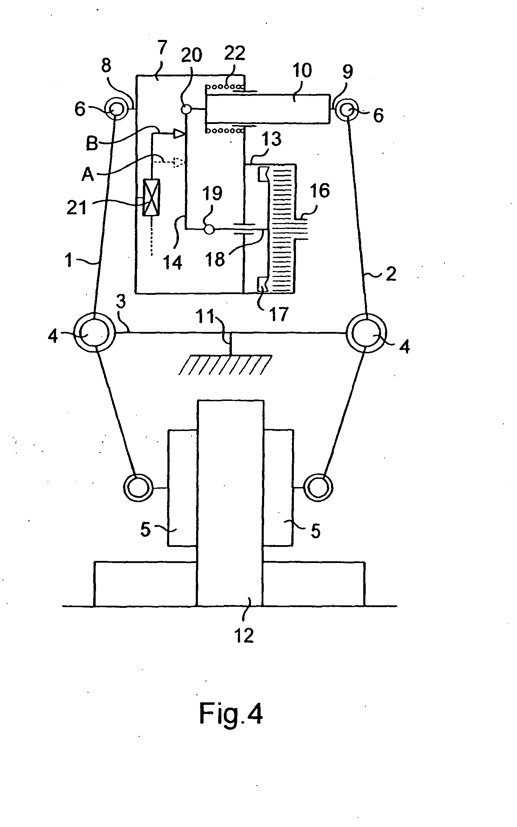

La figure 4 est identique à la figure 3 à ceci près qu'elle permet de rendre compte de la possibilité d'ajustement de la butée 15 en coulissant le long de la glissière 21. Cette figure montre en effet en pointillés la position du pivot, ici notée A, qui correspond aux figures 2 et 3. Une nouvelle position du pivot, notée B est représentée en trait continu.

Pour obtenir cette configuration, la position B de la butée a été ajustée avant la mise en service du cylindre de frein 7 grâce au coulissement permis par la glissière 21. La butée 15 coopère de plus avec des moyens de verrouillage de la position B qui ne sont pas représentés sur les figures 2 à 4 de manière que cette position B de la butée soit fixe pendant le fonctionnement de la timonerie de frein.

L'ajustement permettant de passer de la position A à la position B de la butée a pour but d'adapter le cylindre de frein 7 à une timonerie particulière. En effet, la butée 15 forme au contact avec le levier 14 un point d'articulation intermédiaire disposé entre les points d'articulation extrêmes formés par le pivot 19 et le pivot 20, la position relative de ce point intermédiaire et des points d'articulation extrêmes 19, 20 déterminant les caractéristiques du bras de levier permettant la transmission du mouvement du piston 17 au régleur 10.

Il apparaît en effet que plus ce point d'articulation intermédiaire est proche du pivot 19, plus le bras de levier sera important, c'est-à-dire qu'un déplacement donné de la tige 18 provoquera un important déplacement du régleur 10.

A l'inverse, plus ce point d'articulation intermédiaire est proche du pivot 20, plus le bras de levier sera faible, c'est-à-dire qu'un déplacement donné de la tige 18 provoquera un déplacement plus faible du régleur 10.

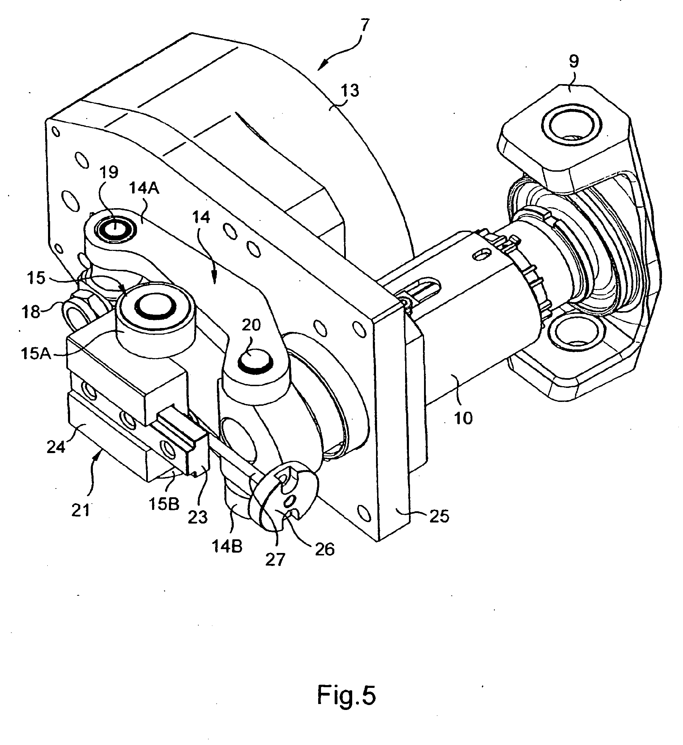

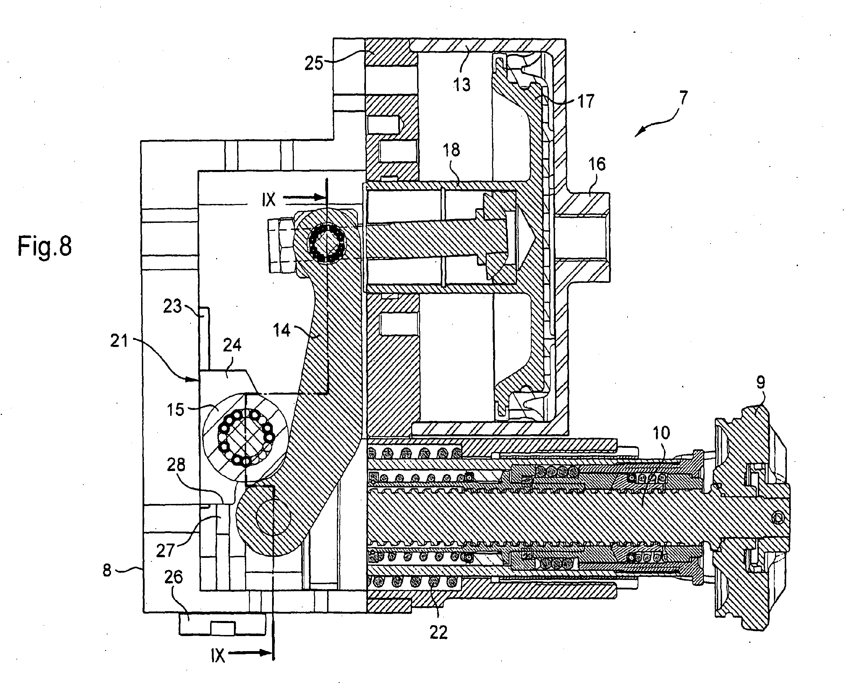

Les figures 5 à 9 représentent un cylindre de frein 7 conforme aux modes de réalisation schématisés sur les figures 2 à 4.

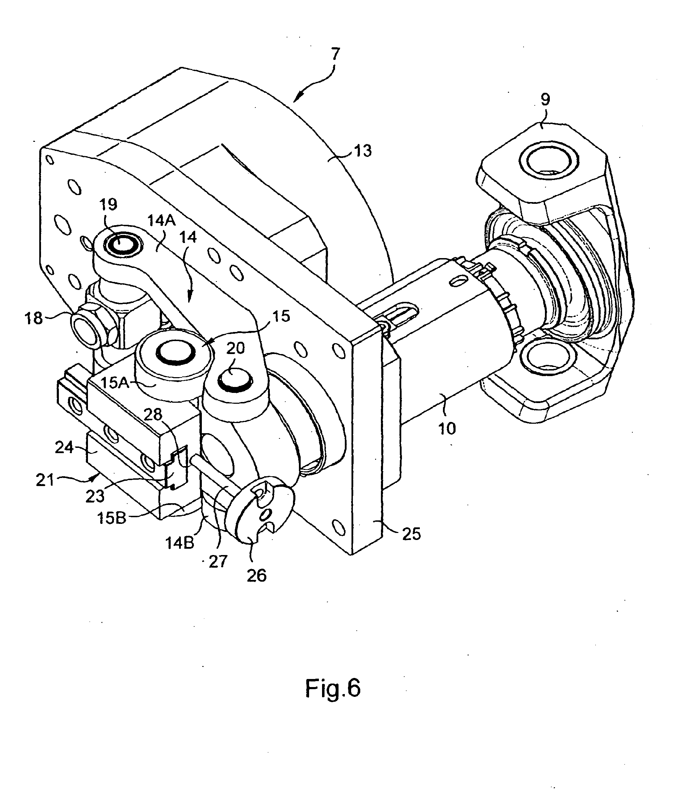

Les figures 5 et 6 montrent en perspective le cylindre de frein 7 dans une position rendant visibles le levier 14 et la butée ajustable 15. La figure 5 montre le cylindre de frein 7 dans une configuration où la butée 15 est dans la position A de la figure 4 tandis que la figure 6 le montre dans une configuration où la butée 15 est dans la position B de la figure 4.

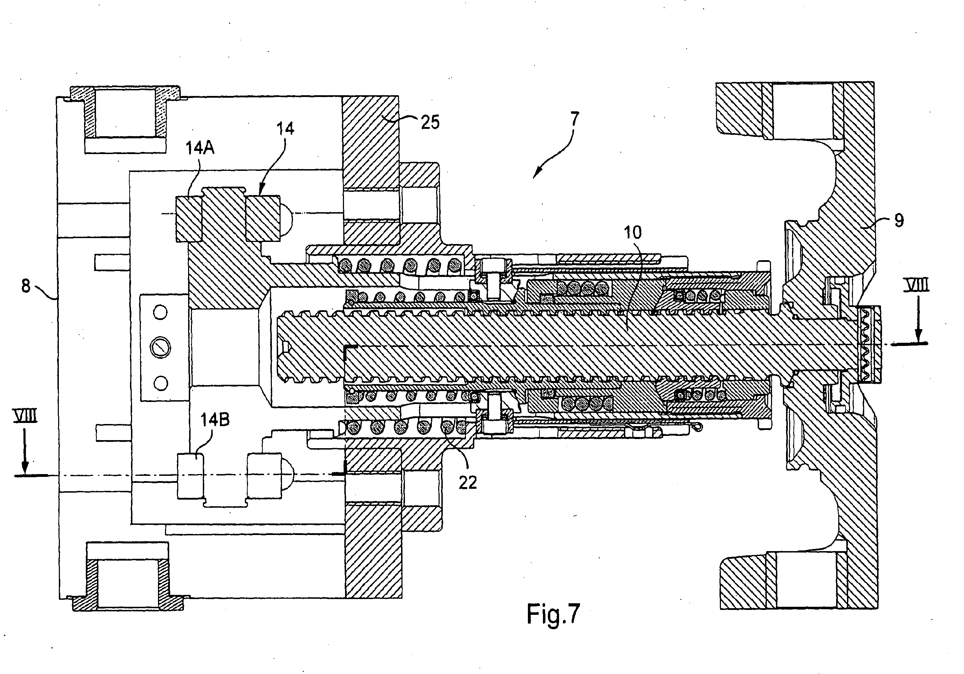

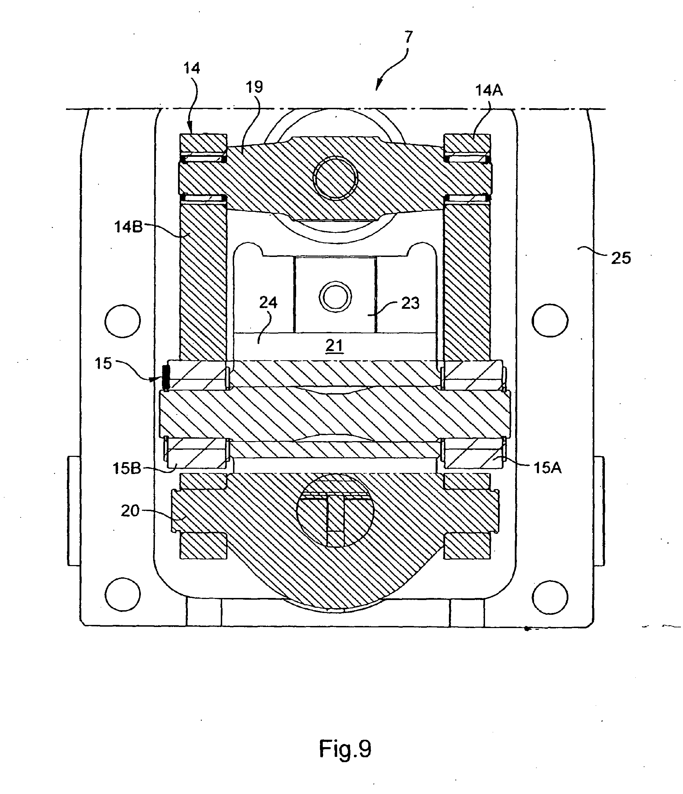

Le levier 14 est ici formé de deux bras 14A, 14B (voir figures 7 et 9) coopérant respectivement avec deux roulements 15A, 15B formant la butée ajustable 15.

La glissière 21 est formée d'un rail 23 recevant un coulisseau 24 sur lequel sont montés, de part et d'autre, les roulements 15A, 15B. Le rail 23 est monté sur une fixation solidaire du bâti 25 du cylindre de frein 7 (cette fixation n'est pas représentée sur les figures 5 et 6 pour une meilleure clarté de celles-ci).

Le cylindre de frein 7 comporte également une butée à vis 26 formant des moyens de verrouillage de la glissière 21 (voir figures 5 et 6). La butée à vis 26 comporte une tige filetée 27 coopérant avec un alésage fileté 28 pratiqué dans le coulisseau 24 de la glissière 21. La butée à vis 26 permet ainsi d'ajuster la position du coulisseau 24 sur le rail 23 et de le maintenir fixe dans la position voulue pour toute la durée de fonctionnement du cylindre de frein 7 lorsque celui-ci a été ajusté pour une timonerie particulière. La butée à vis 26 est elle-même montée en rotation par rapport à une fixation solidaire du bâti 25 du cylindre de frein 7 (cette fixation n'a pas été représentée sur les figures 5 et 6 pour une meilleure clarté de celles-ci).

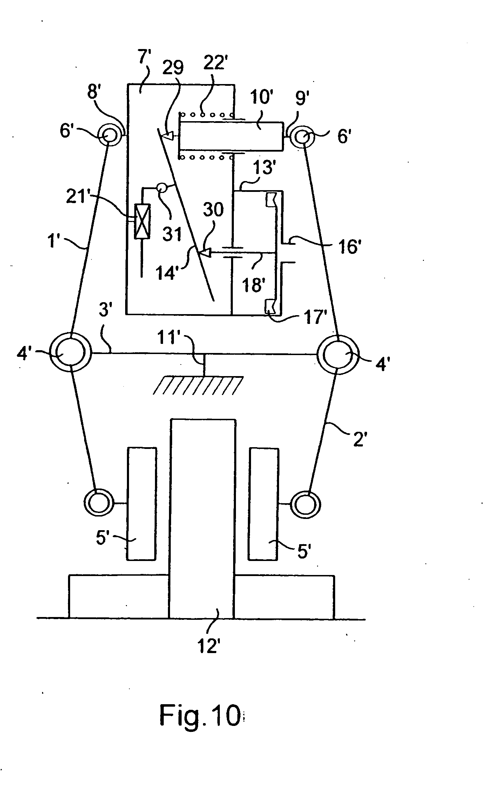

Les figures 10 à 12 sont des représentations schématiques similaires aux figures 2 à 4 mais pour un cylindre de frein 7' conforme à un second mode de réalisation de l'invention. Sur ces figures 10 à 12, les éléments communs avec le mode de réalisation des figures 2 à 4 ont été désignés par le même numéro suivi d'un prime. Le cylindre de frein 7' comporte ainsi une première extrémité 8' et une deuxième extrémité 9', celles-ci étant reliées à un régleur 10' auquel est transmis le mouvement d'un piston 17'.

Conformément à ce deuxième mode de réalisation, un levier 14' est relié par une liaison pivot 31 à une glissière 21'. Le levier 14' est adapté à coopérer, de part et d'autre du pivot 31, avec respectivement un premier appui 29 solidaire du régleur 10' et un deuxième appui 30 solidaire de la tige 18' du piston 17'. La transmission du mouvement du piston 17' au régleur 10' est ainsi assurée grâce au pivotement du levier 14' autour du pivot 31.

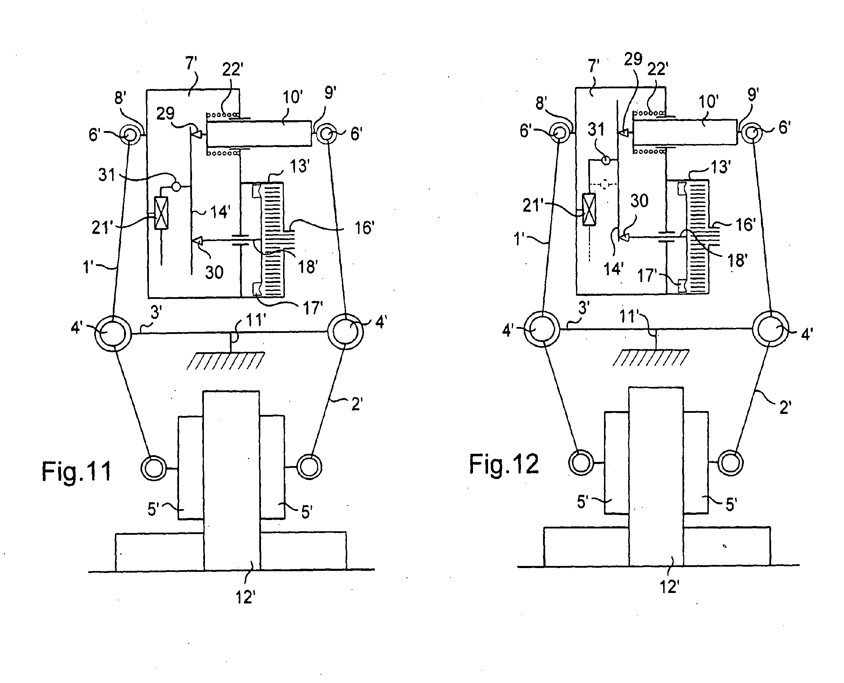

La figure 12 schématise la possibilité d'ajustement du levier 14'. Ce dernier peut effet être déplacé dans la direction de coulissement de la glissière 21' tout en glissant contre les appuis 29, 30.

Le bras de levier ainsi formé est par conséquent ajustable selon ce deuxième mode de réalisation.

Des variantes de réalisation du cylindre de frein peuvent être envisagées sans pour autant sortir du cadre de l'invention. Notamment, l'ensemble formé par le levier et ses moyens d'ajustement peut être formé de tout élément permettant un déplacement d'un point d'articulation intermédiaire formant un pivot pour le levier par rapport à des points d'articulation extrêmes reliés respectivement à la deuxième extrémité du cylindre et à l'actionneur formé dans le présent exemple par un vérin 13.

## Revendications

1. Cylindre de commande (7) pour timonerie de frein ferroviaire, présentant une première extrémité (8) et une deuxième extrémité (9) écartées d'une distance adaptée à varier en réponse à la sollicitation d'un agent de pression, la première extrémité (8) et la deuxième extrémité (9) étant prévues pour être reliées chacune à un mors (1, 2) muni d'une garniture de frein (5), les mors (1, 2) étant articulés sur un bâti (3), ce cylindre de commande (7) comportant, entre sa première extrémité (8) et sa deuxième extrémité (9), un actionneur (13) relié à l'agent de pression et adapté à agir sur un levier (14) qui présente deux points d'articulation extrêmes (19, 20, 29, 30) pour sa liaison avec respectivement l'actionneur (13) et la deuxième extrémité (9) du cylindre (7) ; et un point d'articulation intermédiaire (15, 31) autour duquel le levier (14) est adapté à pivoter, ce cylindre de frein (7) étant **caractérisé en ce qu'**il comporte en outre des moyens d'ajustement définitifs qui sont verrouillés en fonctionnement normal pour faire varier l'écart entre le point d'articulation intermédiaire (15, 31) et les points d'articulation extrêmes (19, 20, 29, 30), l'écart entre les points d'articulation extrêmes (19, 20, 29, 30) étant sensiblement fixe.

2. Cylindre selon la revendication 1, **caractérisé en ce que** les moyens d'ajustement comportent des moyens de déplacement du point d'articulation intermédiaire (15, 31) par rapport aux points d'articulation extrêmes (19, 20, 29, 30).

3. Cylindre selon la revendication 2, **caractérisé en ce que** les moyens de déplacement comportent une glissière (21) dont le coulisseau (24) est relié au point d'articulation intermédiaire (15, 31).

4. Cylindre selon l'une des revendications 1 à 3, **caractérisé en ce que** les moyens d'ajustement comportent des moyens de verrouillage du point d'articulation intermédiaire (15, 31) par rapport aux points d'articulation extrêmes (19, 20, 29, 30).

5. Cylindre selon la revendication 4, **caractérisé en ce que** les moyens de verrouillage comportent une butée à vis (26).

6. Cylindre selon l'une des revendications 1 à 5, **caractérisé en ce que** le levier (14) est relié respectivement à l'actionneur (13) et à la deuxième extrémité (9) du cylindre (7) par une liaison pivot (19, 20) au niveau de chacun des points d'articulation extrêmes et **en ce que** le levier (14) est en appui contre une butée réglable (15) au niveau du point d'articulation intermédiaire, les moyens d'ajustement étant adaptés à modifier la position de la butée réglable (15).

7. Cylindre selon la revendication 6, **caractérisé en ce que** la butée réglable (15) comporte un roulement monté sur une glissière (21).

8. Cylindre selon l'une des revendications 1 à 5, **caractérisé en ce que** le levier (14') est relié au point d'articulation intermédiaire par une liaison pivot (31) et **en ce que** le levier (14') est en appui contre une première butée (30) reliée à l'actionneur (13') et une deuxième butée (29) reliée à la deuxième extrémité (9'), les moyens d'ajustement étant adaptés à modifier la position du levier (14').

## Claims

1. Operating cylinder (7) for railway brake linkage, having a first end (8) and a second end (9) separated by a distance adapted to vary in response to the solicitation of a pressure agent, the first end (8) and the second end (9) each being adapted to be connected to a calliper (1, 2) fitted with a brake lining (5), the callipers (1, 2) being articulated to a frame (3), this operating cylinder (7) including between its first end (8) and its second end (9) an actuator (13) connected to the pressure agent and adapted to act on a lever (14) that has two articulation points (19, 20, 29, 30) at its ends for respectively connecting it to the actuator (13) and the second end (9) of the cylinder (7) and an intermediate articulation point (15, 31) about which the lever (14) is adapted to pivot, this brake cylinder (7) being **characterised in that** it further includes permanent adjustment means that are locked in normal operation to vary the distance between the intermediate articulation point (15, 31) and the end articulation points (19, 20, 29, 30), the distance between the end articulation points (19, 20, 29, 30) being substantially fixed.

2. Cylinder according to claim 1, **characterised in that** the adjustment means include means for displacing the intermediate articulation point (15, 31) relative to the end articulation points (19, 20, 29, 30).

3. Cylinder according to claim 2, **characterised in that** the displacement means include a slide mechanism (21) the sliding member (24) of which is connected to the intermediate articulation point (15, 31).

4. Cylinder according to any of claims 1 to 3, **characterised in that** the adjustment means include means for locking the intermediate articulation point (15, 31) relative to the end articulation points (19, 20, 29, 30).

5. Cylinder according to claim 4, **characterised in that** the locking means include a screw abutment (26).

6. Cylinder according to any of claims 1 to 5, **characterised in that** the lever (14) is connected to the actuator (13) and to the second end (9) of the cylinder (7) by a respective pivot connection (19, 20) at each of the end articulation points and **in that** the lever (14) bears against an adjustable abutment (15) at the intermediate articulation point, the adjustment means being adapted to modify the position of the adjustable abutment (15).

7. Cylinder according to claim 6, **characterised in that** the adjustable abutment (15) includes a bearing mounted on a slide mechanism (21).

8. Cylinder according to any of claims 1 to 5, **characterised in that** the lever (14') is connected to the intermediate articulation point by a pivot connection (31) and **in that** the lever (14') bears against a first abutment (30) connected to the actuator (13') and a second abutment (29) connected to the second end (9'), the adjustment means being adapted to modify the position of the lever (14').

## Patentansprüche

1. Steuerzylinder (7) für Eisenbahnbremsgestänge, der ein erstes Ende (8) und ein zweites Ende (9) aufweist, die um eine Strecke beabstandet sind, die sich in Reaktion auf die Klemmwirkung eines Pressmittels verändern kann, wobei das erste Ende (8) und das zweite Ende (9) dazu vorgesehen sind, jeweils mit einer mit einem Bremsbelag (5) versehenen Klemmbacke (1, 2) verbunden zu werden, wobei die Klemmbacken (1, 2) an einem Rahmen (3) angelenkt sind, wobei dieser Steuerzylinder (7) zwischen seinem ersten Ende (8) und seinem zweiten Ende (9) ein Stellglied (13) aufweist, das mit dem Pressmittel verbunden ist und dazu ausgelegt ist, auf einen Hebel (14) einzuwirken, der zwei Außenanlenkungspunkte (19, 20, 29, 30) für seine Verbindung mit dem Stellglied (13) bzw. mit dem zweiten Ende (9) des Zylinders (7); und einen Zwischenanlenkungspunkt (15, 31), um den der Hebel (14) schwenken kann, aufweist, wobei dieser Bremszylinder (7) **dadurch gekennzeichnet ist, dass** er außerdem Endeinstellmittel aufweist, die im Normalbetrieb verriegelt sind, um den Abstand zwischen dem Zwischenanlenkungspunkt (15, 31) und den Außenanlenkungspunkten (19, 20, 29, 30) zu verändern, wobei der Abstand zwischen den Außenanlenkungspunkten (19, 20, 29, 30) im Wesentlichen fest ist.

2. Zylinder nach Anspruch 1, **dadurch gekennzeichnet, dass** die Einstellmittel Mittel zum Verlagern des Zwischenanlenkungspunkts (15, 31) in Bezug auf die Außenanlenkungspunkte (19, 20, 29, 30) enthalten.

3. Zylinder nach Anspruch 2, **dadurch gekennzeichnet, dass** die Verlagerungsmittel eine Gleitschiene (21) aufweisen, deren Gleitblock (24) mit dem Zwischenanlenkungspunkt (15, 31) verbunden ist.

4. Zylinder nach einem der Ansprüche 1 bis 3, **dadurch gekennzeichnet, dass** die Einstellmittel Mittel zum Verriegeln des Zwischenanlenkungspunkts (15, 31) in Bezug auf die Außenanlenkungspunkte (19, 20, 29, 30) aufweisen.

5. Zylinder nach Anspruch 4, **dadurch gekennzeichnet, dass** die Verriegelungsmittel einen Schraubanschlag (26) aufweisen.

6. Zylinder nach einem der Ansprüche 1 bis 5, **dadurch gekennzeichnet, dass** der Hebel (14) mit dem Stellglied (13) bzw. mit dem zweiten Ende (9) des Zylinders (7) durch eine Schwenkverbindung (19, 20) auf Höhe jedes der Außenanlenkungspunkte verbunden ist und dass der Hebel (14) sich an einem einstellbaren Anschlag (15) auf Höhe des Zwischenanlenkungspunkts abstützt, wobei die Einstellmittel dazu ausgelegt sind, die Position des einstellbaren Anschlags (15) zu verändern.

7. Zylinder nach Anspruch 6, **dadurch gekennzeichnet, dass** der einstellbare Anschlag (15) ein Wälzlager aufweist, das an einer Gleitschiene (21) montiert ist.

8. Zylinder nach einem der Ansprüche 1 bis 5, **dadurch gekennzeichnet, dass** der Hebel (14') mit dem Zwischenanlenkungspunkt durch eine Schwenkverbindung (31) verbunden ist und dass sich der Hebel (14') an einem ersten Anschlag (30), der mit dem Stellglied (13') verbunden ist, und an einem zweiten Anschlag (29), der mit dem zweiten Ende (9') verbunden ist, abstützt, wobei die Einstellmittel dazu ausgelegt sind, die Position des Hebels (14') zu verändern.
